# EUROPEAN PATENT SPECIFICATION

(11) **EP 0 596 950 B1**
(45) Date of publication and mention of the grant of the patent: **26.06.1996**
(21) Application number: 92916183.4
(22) Date of filing: 31.07.1992
(51) Int. Cl.: F16J 15/32

(54) **BRUSH SEAL ASSEMBLY**
BUERSTENDICHTUNG
ENSEMBLE JOINT A SOIES

(30) Priority: 01.08.1991 GB 91166553
(43) Date of publication of application: 18.05.1994
(73) Proprietor: CROSS MANUFACTURING COMPANY (1938) LIMITED, Combe Down, Bath, Avon BA2 5RR (GB)
(72) Inventor: FLOWER, Ralph, Franklyn, John Littledean, Wiltshire SN10 1QE (GB)
(74) Representative: Gillam, Francis Cyril
(86) International application number: GB9201417
(87) International publication number: WO9303299

(56) References cited:
- EP-A- 0 391 676
- GB-A- 2 021 210
- GB-A- 2 033 026
- GB-A- 2 119 037
- GB-A- 2 198 195
- US-A- 5 106 104

## Description

This invention relates to a brush seal assembly adapted to effect a seal between a first component and a surface of a second component which is relatively movable with respect to the first component. The invention also extends to a method of sealing a first component to a relatively movable second component.

It is frequently necessary to effect a fluid-tight seal between two relatively movable components, such as between a rotatable shaft and a housing having a bore through which the shaft extends. Innumerable seal designs have been proposed for this purpose and a machine designer has to select the most appropriate type of seal, having regard to the likely operating conditions to be encountered in service.

For the case of a shaft extending through a bore in a housing and where the shaft rotates at a relatively high speed and in the presence of pressurised hot gases, such as may be encountered in a gas turbine or a jet engine, various designs of brush seal have been developed in an attempt to overcome the unsatisfactory performance of simpler designs such as labyrinth seals. In a brush seal, a plurality of fine bristles (such as of bronze or stainless steel wire) are held in a carrier mounted on the housing, with the tips of the bristles wiping the surface of the shaft so as to effect a seal thereagainst. Alternatively, the carrier could be mounted on the shaft with the bristle tips wiping against the housing, but this configuration does generally give rise to higher relative speeds between the bristle tips and the component against which they effect a seal.

In a typical brush seal intended for use with a pressure difference thereacross, the bristles are supported against deflection in a direction parallel to the shaft axis for the greater part of the length of the bristles by means of an annular backing plate on the low-pressure side of the seal, with the tips of the bristles projecting radially beyond the backing plate to wipe against the shaft surface to be sealed. If it can be expected that the shaft is likely to perform relatively large radial excursions - for instance, as an engine rotor is being run up to operating speed - the clearance between the backing plate and the shaft must be increased, so leading to a greater unsupported length of bristle, projecting beyond the backing plate. If then the seal is subjected to a relatively large pressure difference, the unsupported bristle tips projecting beyond the backing plate will tend to deflect towards the low pressure side and so lift clear of the shaft, and the sealing effect will be lost. If the bristles are made stiffer (for example by increasing the diameter of each bristle) the bristles may be too stiff to give an adequate sealing function able to accommodate minor radial excursions between the shaft and the housing; also rapid wear of the shaft may be expected as a consequence of the relatively stiff bristles wiping the shaft.

In the brush seal assembly shown in GB-A-2 198 195, which discloses the closest prior art as defined in the preamble portions of the independent claims, a series of spaced rows of bristles are provided. The document is however silent on the physical characteristics of the bristles of the different rows.

It is a principal aim of the present invention to provide a brush seal assembly adapted to effect a seal between two relatively movable components for a situation where the seal assembly is likely to be subjected to relatively great pressure differences thereacross, and which seal assembly is nevertheless still able to achieve a good sealing effect.

According to a first aspect of the present invention, there is provided a brush seal assembly for effecting a seal between a first component and a surface of a second component relatively movable with respect to the first component, which seal assembly comprises a carrier adapted for mounting on the first component and including a backing plate which extends towards said surface of the second component, a first row of bristles lying against the backing plate to project therebeyond towards said surface of the second component, and a second row of bristles spaced from said first row of bristles but also arranged to project towards said surface of the second component , characterised by a majority of the bristles of the second row each having physical characteristics different from those of each of a majority of the bristles of the first row.

In the following further description of the present invention, reference will primarily be made to the sealing of a housing (the first component) to a rotatable shaft (the second component) extending through a bore in the housing. It will however be understood that the brush seal assembly of this invention may be used with the carrier mounted on the shaft to effect a seal against a surface of the housing or to effect a seal between other relatively movable components besides a housing and a shaft, such as between an engine nozzle and the engine housing. References herein to a housing and to a shaft should be construed accordingly.

It will be appreciated that a brush seal assembly of the present invention is able to accommodate relatively large pressure differences across the seal, by virtue of the two rows of bristles. The performance of the seal may be optimised by ensuring that the pressure drop across the first row of bristles is at least comparable to, if not substantially equal to, the pressure drop across the second row of bristles. This may be achieved by appropriate selection of the materials of the bristles of the two rows and the physical characteristics of those bristles. Some applications may permit different pressure drops across the rows, the total pressure still being shared amongst all of the rows.

Most preferably, in the seal assembly of this invention, a second backing plate is provided for the bristles of the second row. Advantageously, the radial extent of said second backing plate is substantially the same as that of the first-mentioned backing plate, with the bristles of the second row projecting beyond that second backing plate by substantially the same amount as the bristles of the first row. In this way, the bristles of the second row may accommodate substantially the same excursions of the second component with respect to the first component, without damage resulting to the seal assembly.

The physical characteristics of the bristles of the two rows may be selected empirically, having regard to the intended operating conditions for a particular seal assembly. Thus, the selection of the appropriate physical characteristics for the bristles of the two rows may depend, amongst others, upon the total pressure difference to which the seal is subjected, the temperature on the high pressure side of the seal and the ambient temperature on the low pressure side thereof, the diameter and intended rotational rate of the shaft against which the tips of the two rows of bristles effect a seal, the nature of the gases on the high pressure side of the seal, and so on. When these operating parameters have been determined, then a selection of the appropriate materials for manufacturing the two rows of bristles may be made. In doing this, due regard may be made to the following physical characteristics, for the bristles in each row thereof: the number of bristles; the cross-sectional dimensions of bristles; the length of the bristles; and the material from which each bristle is made. Moreover, the cross-sectional profile (shape) of the bristles need not be circular, and so may be selected having regard to the intended sealing effect. In that case, the orientation of each bristle may also be adjusted to suit the circumstances.

The characteristics for each row of bristles may also be controlled by including bristles having different characteristics in each row. Thus, the mixture of the different kinds of bristles in the two rows may be altered, so as to give rise to the required physical characteristics for each row of bristles, considered as a whole, so as thereby to allow an optimum seal performance.

Yet another possibility, in order to obtain a seal assembly with the required physical characteristics as a whole, would be to vary the interference or clearance between the bristle tips and the surface against which those tips seal, for the two rows respectively. Thus, there may be a first interference or clearance at the tips of the bristles of the first row, and a second interference or clearance at the tips of the bristles of the second row which second interference or clearance is different from said first interference or clearance. In this way, a greater leakage past the tips of the bristles of one row may be obtained as compared to the tips of the bristles of the other row, whereby a balancing of the pressure drops across each of the two rows may be achieved.

In a modified seal of this invention, there is provided within the space between said first and second rows of bristles one or more further rows of bristles configured generally similarly to said first and second rows of bristles, but spaced from both of said first and second rows of bristles. The physical characteristics of the or each further row of bristles disposed between said first and second rows of bristles may be the same as either one of said first and second rows of bristles, or different yet again from both said first and second rows of bristles. However, optimisation of the performance of such a seal having more than two rows of bristles may be obtained by aiming at balancing the pressure drops across each row of bristles so as to be substantially uniform. The control of the physical characteristic of the or each further row of bristles may be obtained in the same manner as has been described above, for said first and second rows of bristles.

The free end of each backing plate may be provided with an abraidable rubbing surface which may be contacted by the shaft should the latter perform larger than expected excursions, for example as the shaft is running up to its normal rotational speed. The rubbing surface may then wear away as much as is necessary to accommodate the excursions whilst still maintaining at a minimum the clearance between the free end of the backing plate and the shaft. Such rubbing surfaces are known per se, in the brush seal art.

According to a second aspect of the present invention, there is provided a method of sealing a first component to a surface of a second component relatively movable with respect to the first component, in which method a seal assembly comprising a carrier supporting at least two spaced-apart rows of bristles is mounted on the first component such that the bristles project towards said surface of the second component, characterised by the physical characteristics of the two rows of bristles being different and being selected having regard to the operating conditions to which the seal assembly is to be subjected when in use, whereby the total pressure drop across the seal is shared between the two rows of bristles.

Most preferably, the pressure drop across each of the two rows of bristles is substantially the same.

The method of this invention may be used with a seal assembly having more than two rows of bristles, in which case the physical characteristics of all of the rows of bristles should be selected having regard to the operating conditions for the seal assembly whereby the pressure drop across each of the rows of bristles is substantially the same, when the seal assembly is in service.

The selection of the physical characteristics for the rows of bristles may be made empirically, and must of course be made before the seal is assembled and placed in service; the physical characteristics may be controlled by varying the parameters of each bristle in a row in the manner described above.

By way of example only, certain specific embodiments of seal assembly constructed and arranged in accordance with the present invention will now be described in detail, reference being made to the accompanying drawings, in which:-
Figure 1 is a cross-section taken through a first embodiment of seal assembly, on a radial plane thereof;
Figure 2 is a partial axial end view on the seal illustrated in Figure 1;
Figure 3 is a diagrammatic cross-section on a second embodiment of seal assembly; and
Figure 4 is a diagrammatic cross-section on a third embodiment of seal assembly.

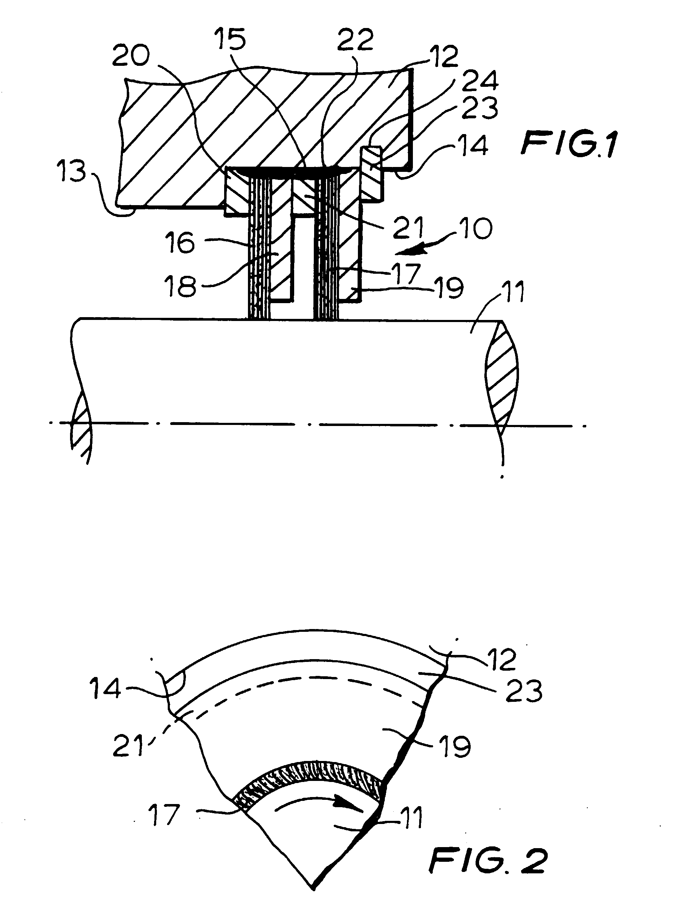

Referring initially to Figures 1 and 2, the first embodiment of brush seal assembly 10 of this invention is intended to effect a seal between a rotatable shaft 11 and a housing 12 having a bore 13 through which the shaft 11 extends. The seal assembly 10 is mounted in a counter-bore 14 co-axial with the bore 13, and comprises a base portion 15 from which extend two annular rows 16 and 17 of bristles held by the base portion 15 in a parallel, spaced-apart configuration. The base portion includes first and second annular backing plates 18 and 19 with the rows 16 and 17 of bristles lying against the respective backing plate so as to be supported thereby. An annular clamping member 21 is disposed between row 17 of bristles and backing plate 18, and a similar clamping member 20 is disposed against row 16 of bristles.

Each row of bristles comprises metallic wires, and the seal assembly is manufactured by a welding operation, performed around the peripheries of the two rows of bristles, the two backing plates, and the two clamping members, as illustrated by weld bead 22. In the alternative, and depending upon the materials from which the bristles are manufactured, the seal assembly could be manufactured by some other bonding process to give complete seal integrity. The finished seal assembly 10 is held in position in the counter-bore 14 by means of a circlip 23, located in a groove 24 formed in the counter-bore.

As can be seen, the tips of the bristles project beyond their associated backing plate and wipe against the shaft to effect a seal thereagainst. In use, the seal assembly is subjected to a high pressure difference, with row 16 of bristles facing the high pressure; in this way, the backing plates 18 and 19 support the rows 16 and 17 respectively of bristles against deflection towards the low pressure side of the seal with only the projecting tip portions remaining unsupported. The materials from which the bristles of each row are made, as well as the physical characteristics of those bristles, are selected having regard to the intended operating conditions to which the seal is to be subjected, so that the total pressure drop is shared between the two rows of bristles. Depending upon the design requirements, the total pressure drop could be shared substantially equally by the two rows, or each row could accept a designed pressure drop different from that of the other row. To achieve this, the number of bristles in each row, the sizes of those bristles, the lengths of the bristles, and the cross-sectional profiles and dimensions of those bristles may all be varied to allow a complete row of bristles to have the required sealing effect. Moreover, mixtures of different kinds of bristles may be employed in each row, to give the required characteristics; for example, the diameters of the bristles or the materials from which they are made may be varied, in each row.

For example, in one specific embodiment of seal constructed generally as described above, the first row 16 of bristles may have an axial dimension in which is accommodated fifteen closely-packed bristles, whereas the second row 17 of bristles could have an axial dimension in which is accommodated eight closely-packed bristles, the bristles of the two rows otherwise being essentially the same. In an alternative example, intended to seal under the same operating conditions, the first row 16 of bristles may comprise a mixture of wires of 0.004 in. and 0.002 in. diameter (approximately 1.016 x 10⁻¹ and 5.08 x 10⁻²mm diameter), whereas the second row 17 of bristles comprises wires of 0.004 in. diameter only (approximately 1.016 x 10⁻¹ mm diameter), the numbers of wires and the physical characteristics of those wires otherwise being substantially the same, in each row.

Taking as an example, a seal may be required to have an external diameter of approximately 12 in. (304.8 mm) and to be subjected to a super-ambient pressure of approximately 140 psi (about 9.5 bar). It may be necessary to provide a radial clearance of 0.09 in. (about 2.3 mm) between the shaft and the radially inner end of the backing plate in order to accommodate expected shaft excursions. If a single row brush seal of a known design were employed in these circumstances. the clearance of 0.09 in (about 2.3 mm) would allow the tips of the bristles to deflect to an unacceptable extent under the pressure difference to which the seal is subjected, but using the examples of seal of this invention discussed above, having two rows of bristles with the pressure across each row balanced to be substantially the same, each row is subjected to only approximately 70 psi (about 4.75 bar) and so the tip deflection will be acceptable, notwithstanding the relatively high clearance between the shaft and the radially inner end of each backing plate.

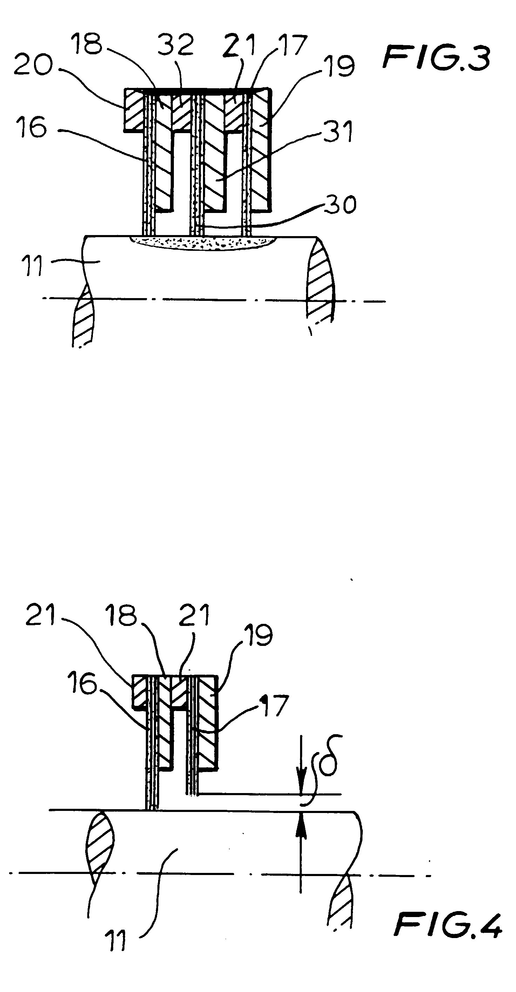

Figure 3 shows a second embodiment of seal of this invention, and like components with those of Figure 1 are given like reference characters; those components will not here be described again. The seal of Figure 3 differs from that of Figures 1 and 2 in that a third row 30 of bristles, together with an associated backing plate 31 and clamping member 32, are disposed between the first row 16 and second row 17 of bristles. The third row 30 of bristles may have the same physical characteristics as either row 16 or row 17, or the third row 30 of bristles may have physical characteristics different from both of rows 16 and 17. Either way, the seal performance should be optimised by selecting the appropriate physical characteristics for all 3 rows such that the pressure difference across each row, when the seal is in service, is substantially the same. In this way, tip deflection of any one row of bristles under applied pressure may be minimised whilst still allowing relatively large clearances between the shaft and the radially inner ends of the backing plates 18, 19 and 31.

Figure 4 shows a fourth embodiment of seal assembly of this invention, similar to that of Figures 1 and 2 but differing in that the second row 17 of bristles has an internal diameter slightly greater than that of the first row 16 of bristles; in this way, when the seal has been fully assembled with the shaft, there will be a small clearance 6 between the tips of the bristles of the second row 17 and the shaft 11. Typically, that small clearance may be of the order of 0.002 in. (about 5.08 x 10⁻² mm). The leakage path produced by this clearance will reduce the pressure drop across row 17, allowing that pressure drop to be balanced against the pressure drop across row 16. Again, depending upon the exact operating parameters, it may be more advantageous to increase the interference between the bristles of row 16 and the shaft; in the alternative, the bristles of row 16 could be arranged to be clear of the shaft, with the tips of the bristles of row 17 rubbing the shaft.

## Claims

1. A brush seal assembly (10) for effecting a seal between a first component (12) and a surface of a second component (11) relatively movable with respect to the first component, which seal assembly (10) comprises a carrier adapted for mounting on the first component (12) and including a backing plate (18,19) which extends towards said surface of the second component (11), a first row (16) of bristles lying against the backing plate (18) to project therebeyond towards said surface of the second component (11), and a second row (17) of bristles spaced from said first row (16) of bristles but also arranged to project towards said surface of the second component (11), characterised by a majority of the bristles of the second row (17) each having physical characteristics different from those of each of a majority of the bristles of the first row (16).

2. A brush seal assembly according to Claim 1, wherein a second backing plate (19) is provided for the bristles of the second row (17), which second backing plate (19) extends towards said surface of the second component (11) and against which the bristles of the second row (17) lie.

3. A brush seal assembly according to Claim 2, wherein the radial extent of said second backing plate (19) is substantially the same as that of the first-mentioned backing plate (18), with the bristles of the second row (17) projecting beyond said second backing plate (19) by substantially the same amount of the bristles of the first row (16) project beyond their associated backing plate (18).

4. A brush seal assembly according to any of the preceding Claims, wherein the characteristics for each row (16,17) of bristles is controlled by including bristles having different characteristics, in each row.

5. A brush seal assembly according to any of the preceding Claims, wherein the radial extent of the bristles of the two rows (16,17) is different whereby interference or clearance between the bristle tips and the surface against which those tips seal, is different for the two rows respectively.

6. A brush seal assembly according to any of the preceding Claims, wherein there is provided within the space between said first and second rows (16,17) of bristles one or more further rows (30) of bristles configured generally similarly to said first and second rows (16,17) of bristles, but spaced from both of said first and second rows of bristles.

7. A method of sealing a first component (12) to a surface of a second component (11) relatively movable with respect to the first component, in which method a seal assembly (10) comprising a carrier supporting at least two spaced-apart rows (16,17) of bristles is mounted on the first component (12) such that the bristles project towards said surface of the second component (11), characterised by the physical characteristics of the two rows (16,17) of bristles being different and being selected having regard to the operating conditions to which the seal assembly (10) is to be subjected when in use, whereby the total pressure drop across the seal is shared between the two rows (16,17) of bristles.

8. A method according to Claim 7, in which the physical characteristics of the bristles of the two rows (16,17) are selected such that the pressure drop across each of the two rows of bristles is substantially the same.

9. A method according to Claim 7 or Claim 8, in which the seal assembly has at least one further row (30) of bristles disposed between said two rows (16,17) of bristles, the physical characteristics of all of the rows of bristles being selected such that the pressure drop across each of the rows of bristles is substantially the same when the seal assembly is in service.

10. A method according to any of Claims 7 to 9, in which the physical characteristics of the bristles of the rows (16,17,30) thereof are selected having regard to the total pressure difference to which the seal (10) is to be subjected, the temperature on the high pressure side of the seal and the ambient temperature on the low pressure side thereof when in service, the diameter and intended surface speed of the second component (11) against which the tips of the rows (16,17,30) of bristles effect a seal, and the nature of the gases on the high pressure side of the seal.

11. A method according to any of Claims 7 to 10, in which the physical characteristics for the bristles in each row (16,17,30) thereof are controlled by selecting: the number of bristles; the cross-sectional dimensions of bristles; the length of the bristles; the material from which each bristle is made; and the cross-sectional profile (shape) of each bristle.

12. A method according to any of Claims 7 to 11, in which the interference or clearance between the bristle tips and the surface against which those tips seal, is different for each row respectively.

## Patentansprüche

1. Bürstendichtungsanordnung (10) zur Bewirkung einer Abdichtung zwischen einem ersten Bauteil (12) und einer Fläche eines zweiten Bauteils (11), das in bezug auf das erste Bauteil bewegbar ist, wobei die Dichtungsanordnung (10) einen Träger aufweist, der zur Montage auf dem ersten Bauteil (12) gestaltet ist und eine Stützplatte (18, 19) aufweist, die sich in Richtung auf die Fläche des zweiten Bauteils (11) erstreckt, mit einer ersten Reihe (16) von Borsten, die an der Stützplatte (18) anliegen, um darüber in Richtung auf die Fläche des zweiten Bauteils (11) vorzustehen, und mit einer zweiten Reihe (17) von Borsten, die von der ersten Reihe (16) von Borsten beabstandet, jedoch auch so angeordnet ist, daß sie in Richtung auf die Fläche des zweiten Bauteils (11) vorsteht, **dadurch gekennzeichnet**, daß der größte Teil der Borsten der zweiten Reihe (17) physikalische Eigenschaften hat, die sich von dem größten Teil der Borsten der ersten Reihe (16) unterscheiden.

2. Bürstendichtungsanordnung nach Anspruch 1, wobei eine zweite Stützplatte (19) für die Borsten der zweiten Reihe (17) vorgesehen ist, wobei die zweite Stützplatte (19) in Richtung auf die Fläche des zweiten Bauteils (11) ragt und an der die Borsten der zweiten Reihe (17) anliegen.

3. Bürstendichtungsanordnung nach Anspruch 2, wobei die radiale Erstreckung der zweiten Stützplatte (19) im wesentlichen die gleiche wie der der zuerst erwähnten Stützplatte (18) ist, wobei die Borsten der zweiten Reihe (17) über die zweite Stützplatte (19) um im wesentlichen den gleichen Betrag vorstehen, den die Borsten der ersten Reihe (16) über ihre zugehörige Stützplatte (18) hinausragen.

4. Bürstendichtungsanordnung nach einem der vorhergehenden Ansprüche, wobei die Eigenschaften jeder Reihe (16, 17) von Borsten durch Einschließen von Borsten gesteuert ist, die in jeder Reihe unterschiedliche Eigenschaften haben.

5. Borstendichtungsanordnung nach einem der vorhergehenden Ansprüche, wobei die radiale Erstreckung der Borsten der zwei Reihen (16, 17) unterschiedlich ist, wodurch der Eingriff oder Abstand von den Borstenspitzen zu der Fläche, die jene Spitzen abdichten, für die beiden Reihen jeweils unterschiedlich ist.

6. Bürstendichtungsanordnung nach einem der vorhergehenden Ansprüche, wobei in dem Freiraum zwischen den ersten und zweiten Reihen (16, 17) von Borsten eine oder mehrere Reihen (30) von Borsten angeordnet ist, die im allgemeinen ähnlich wie die ersten und zweiten Reihen (16, 17) von Borsten gestaltet, aber von sowohl den ersten, als auch den zweiten Reihen von Borsten beabstandet sind.

7. Verfahren zum Abdichten eines ersten Bauteils (12) gegenüber der Fläche eines zweiten Bauteils (11), das gegenüber dem ersten Bauteil bewegbar ist, wobei eine Dichtungsanordnung (10) mit einem Träger, der mindestens zwei voneinander beabstandete Reihen (16, 17) von Borsten aufweist, an dem ersten Bauteil (12) derart montiert wird, daß die Borsten in Richtung auf die Fläche des zweiten Bauteils (11) vorstehen, **dadurch gekennzeichnet**, daß die physikalischen Eigenschaften der beiden Reihen (16, 17) von Borsten unterschiedlich sind und in bezug auf die Betriebsbedingungen ausgewählt werden, denen die Dichtungsanordnung (10) im Betrieb unterworfen wird, wodurch der gesamte Druckabfall über die Dichtung auf die beiden Reihen (16, 17) von Borsten aufgeteilt ist.

8. Verfahren nach Anspruch 7, wobei die physikalischen Eigenschaften der Borsten der zwei Reihen (16, 17) derart gewählt werden, daß der Druckabfall über jede der zwei Reihen von Borsten im wesentlichen der gleiche ist.

9. Verfahren nach Anspruch 7 oder 8, wobei die Dichtungsanordnung mindestens eine weitere Reihe (30) von Borsten aufweist, die zwischen den zwei Reihen (16, 17) von Borsten angeordnet sind, wobei die physikalischen Eigenschaften von allen Borstenreihen derart ausgewählt werden, daß der Druckabfall über jede der Reihen von Borsten im wesentlichen der gleiche ist, wenn die Dichtungsanordnung sich in Betrieb befindet.

10. Verfahren nach einem der Ansprüche 7 bis 9, wobei die physikalischen Eigenschaften der Borsten jeder der Reihen (16, 17, 30) ausgewählt werden in bezug auf die gesamte Druckdifferenz, der die Dichtung (10) unterworfen werden soll, die Temperatur an der Hochdruckseite der Dichtung und die Umgebungstemperatur an der Niederdruckseite davon im Betrieb, den Durchmesser und die vorgesehen Flächengeschwindigkeit des zweiten Bauteils (11), gegen das die Spitzen der Reihen (16, 17, 30) von Borsten eine Dichtungswirkung ausüben, und die Art des Gases an der Hochdruckseite der Dichtung.

11. Verfahren nach einem der Ansprüche 7 bis 10, wobei die physikalischen Eigenschaften der Borsten in jeder Reihe (16, 17, 30) gesteuert werden durch Auswählen: der Anzahl von Borsten; der Querschnittsabmessungen der Borsten; der Länge der Borsten; des Materials aus dem jede Borste gemacht ist; und der Querschnittsform jeder Borste.

12. Verfahren nach einem der Ansprüche 7 bis 11, wobei der Eingriff oder der Abstand zwischen den Borstenspitzen und der Fläche, die jene Spitzen abdichten, für jede Reihe unterschiedlich ist.

## Revendications

1. Ensemble joint à brosse (10) pour former un joint entre un premier composant (12) et une surface d'un second composant (11) mobile relativement au premier composant, lequel ensemble joint (10) comprend un support adapté à être monté sur le premier composant (12) et incluant une plaque de soutien (18, 19) qui s'étend vers ladite surface du second composant (11), une première rangée (16) de soies s'étendant contre la plaque de soutien (18) pour faire saillie par rapport à celle-ci vers ladite surface du second composant (11), et une seconde rangée (17) de soies écartée de la première rangée (16) de soies mais également agencée pour faire saillie vers ladite surface du second composant (11), caractérisé en ce qu'une majorité des soies de la seconde rangée (17) ont chacune des caractéristiques physiques différentes de celles de chacune d'une majorité des soies de la première rangée (16).

2. Ensemble joint à brosse selon la revendication 1, dans lequel une seconde plaque de soutien (19) est prévue pour les soies de la seconde rangée (17), laquelle seconde plaque de soutien (19) s'étend vers ladite surface du second composant (11), les soies de la seconde rangée (17) s'étendant contre la seconde plaque.

3. Ensemble joint à brosse selon la revendication 2, dans lequel l'étendue radiale de la seconde plaque de soutien (19) est sensiblement la même que celle de la plaque de soutien (18) mentionnée en premier lieu, les soies de la seconde rangée (17) faisant saillie au-delà de la seconde plaque de soutien (19) sensiblement dans la même mesure que les soies de la première rangée (16) font saillie au-delà de leur plaque de soutien (18) associée.

4. Ensemble joint à brosse selon l'une quelconque des revendications précédentes, dans lequel les caractéristiques sont ajustées pour chaque rangée (16, 17) de soies en incluant des soies ayant différentes caractéristiques, dans chaque rangée.

5. Ensemble joint à brosse selon l'une quelconque des revendications précédentes, dans lequel l'étendue radiale des soies des deux rangées (16, 17) est différente de sorte que l'interférence ou le jeu entre les pointes des soies et la surface contre laquelle ces pointes forment joint, diffère pour les deux rangées respectivement.

6. Ensemble joint à brosse selon l'une quelconque des revendications précédentes, dans lequel il est prévu dans l'espace entre la première et la seconde rangée (16, 17) de soies une ou plusieurs autres rangées (30) de soies configurée(s) d'une manière généralement similaire à la première et la seconde rangée (16, 17) de soies mais espacée(s) à la fois de la première et de la seconde rangée de soies.

7. Procédé pour assurer l'étanchéité d'un premier composant (12) avec la surface d'un second composant (11) mobile relativement au premier composant, procédé dans lequel un ensemble joint (10) comprenant un support portant au moins deux rangées (16, 17) espacées de soies est monté sur le premier composant (12) de façon que les soies fassent saillie vers ladite surface du second composant (11), caractérisé en ce que les caractéristiques physiques des deux rangées (16, 17) de soies sont différentes et choisies au vu des conditions de fonctionnement auxquelles l'ensemble joint (10) est destiné à être soumis en service, de sorte que la chute de pression totale à travers le joint est partagée entre les deux rangées (16, 17) de soies.

8. Procédé selon la revendication 7, dans lequel les caractéristiques physiques des soies des deux rangées (16, 17) sont choisies de façon que la chute de pression à travers chacune des deux rangées de soies soit sensiblement la même.

9. Procédé selon la revendication 7 ou 8, dans lequel l'ensemble joint comporte au moins une autre rangée (30) de soies disposée entre lesdites deux rangées (16, 17) de soies, les caractéristiques physiques de toutes lesdites rangées de soies étant choisies de façon que la chute de pression à travers chacune des rangées de soies soit sensiblement la même lorsque l'ensemble joint est en service.

10. Procédé selon l'une quelconque des revendications 7 à 9, dans lequel les caractéristiques physiques des soies des rangées (16, 17, 30) sont choisies au vu de la différence de pression totale à laquelle le joint (10) est destiné à être soumis, la température du côté haute pression du joint et la température ambiante du côté basse pression du joint lorsqu'il est en service, le diamètre et la vitesse de surface prévue du second composant (11) contre laquelle les pointes des rangées (16, 17, 30) de soies forment un joint, et la nature des gaz du côté haute pression du joint.

11. Procédé selon l'une quelconque des revendications 7 à 10, dans lequel les caractéristiques des soies dans chaque rangée (16, 17, 30) de celles-ci sont ajustées en choisissant: le nombre de soies; les dimensions des soies en coupe transversale; la longueur des soies; la matière dont chaque soie est faite; et le profil (forme) de la coupe transversale de chaque soie.

12. Procédé selon l'une quelconque des revendications 7 à 11, dans lequel l'interférence ou jeu entre les pointes des soies et la surface contre laquelle ces soies forment un joint est différente pour chaque rangée respectivement.
